(19) Europäisches Patentamt
European Patent Office
Office européen des brevets

(11) Veröffentlichungsnummer : **0 054 616**
**B1**

(12) # EUROPÄISCHE PATENTSCHRIFT

(45) Veröffentlichungstag der Patentschrift : **08.02.84**

(51) Int. Cl.$^3$ : **C 09 B 44/02**, C 04 B 43/16, D 06 P 1/08, D 21 H 3/80

(21) Anmeldenummer : **81106726.3**

(22) Anmeldetag : **28.08.81**

(54) **Kationische Triazinfarbstoffe, ihre Herstellung und Verfahren zum Färben.**

(30) Priorität : **24.12.80 DE 3048997**

(43) Veröffentlichungstag der Anmeldung : **30.06.82 Patentblatt 82/26**

(45) Bekanntmachung des Hinweises auf die Patenterteilung : **08.02.84 Patentblatt 84/06**

(84) Benannte Vertragsstaaten : **CH DE FR GB IT LI**

(56) Entgegenhaltungen : **FR-A- 2 424 305**
**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Kunde, Klaus, Dr.**
**Uppersberg 45**
**D-5090 Leverkusen 1 (DE)**

**EP 0 054 616 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Kationische Triazinfarbstoffe, ihre Herstellung und Verfahren zum Färben

Gegenstand der Erfindung sind neue Farbstoffe der allgemeinen Formel

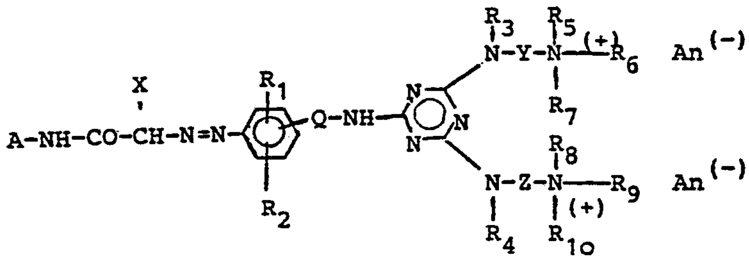

(I)

worin

A ein anionischen Gruppen freier aromatischer oder heteroaromatischer Rest,

Q eine direkte Bindung oder ein Brückenglied

X ein Rest der Formel $COCH_3$, CN, $COOCH_3$, $COOC_2H_5$, $CONH_2$, $COC_6H_5$ oder $CON(R_3)—Y—N(R_5H_6R_7)^{(+)}An^{(-)}$,

Y und Z unabhängig voneinander ein zweiwertiges Brückenglied oder eine direkte Bindung,

$R_1$ und $R_2$ unabhängig voneinander Wasserstoff oder ein nichtionischer Substituent,

$R_3$ und $R_4$ unabhängig voneinander Wasserstoff, $C_1$-$C_4$-Alkyl oder β- oder γ-$C_2$-$C_4$-Hydroxyalkyl,

$R_5$-$R_{10}$ unabhängig voneinander Wasserstoff, $C_1$-$C_4$-Alkyl, β- oder γ-$C_2$-$C_4$-Hydroxyalkyl, β- oder γ-$C_2H_4$-Ammoniumalkyl, Phenyl oder Benzyl sind, oder

$R_5$ und $R_6$ und/oder $R_8$ und $R_9$ jeweils zusammen mit dem Stickstoff einen fünf- oder sechsgliedrigen Heterocyclus oder

Y, $R_3$ und $R_5$ und/oder Z, $R_4$ und $R_8$ zusammen mit dem jeweiligen Stickstoffatomen einen Piperazinring bilden

$R_5$, $R_6$ und $R_7$ und/oder $R_8$, $R_9$ und $R_{10}$ jeweils zusammen mit dem Stickstoff einen gegebenenfalls substituiertes Pyridinium bilden, und

$An^{(-)}$ ein Anion ist.

sowie Verfahren zu ihrer Herstellung, dadurch gekennzeichnet, daß man ein Mol eines Cyanurhalogenids in beliebiger Reihenfolge und in der üblichen Weise mit je einem Mol der Verbindungen

$$[HN(R_3)—Y—NR_5R_6R_7]^{(+)}An^{(-)} \quad (II)$$

$$[HN(R_4)—Z—NR_8R_9R_{10}]^{(+)}An^{(-)} \quad (III)$$

und

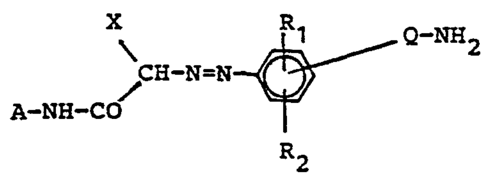

(IV)

wobei A, Q, X, Y, Z, $R_1$-$R_{10}$ und $An^{(-)}$ die oben angegebene Bedeutung besitzen, umsetzt oder daß man ein Mol eines Amins der allgemeinen Formel

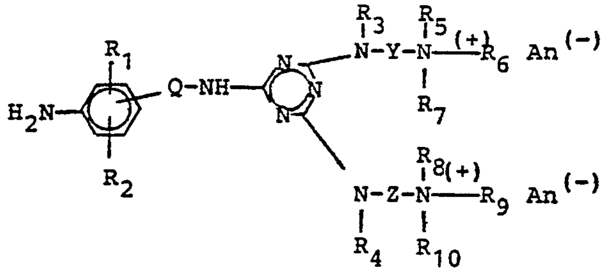

(V)

diazotiert und mit einem Mol einer Kupplungskomponente der allgemeinen Formel

$$X—CH_2—CO—NH—A \quad (VI)$$

wobei A, Q, X, Y, $R_1$-$R_{10}$ und $An^{(-)}$ die oben angegebene Bedeutung besitzen, kuppelt.

Außerdem ist die Verwendung der Farbstoffe der Formel I zum Färben von synthetischen und natürlichen kationisch anfärbbaren Materialien, insbesondere Papier, Gegenstand der Erfindung.

A steht insbesondere für einen Rest der Benzol-, Naphthalin-, Thiazol-, Benzthiazol-, Benzisothiazol- oder Thiadiazol-Reihe.

Als Brückenglied Q sind beispielsweise die Reste

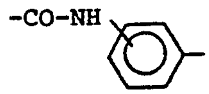

und

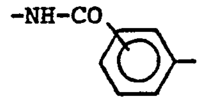

zu nennen, wobei der Benzolring mit der NH-Gruppe der Formel I verbunden ist.

Die Brückenglieder Y und Z stehen z. B. für $C_2$-$C_5$-Alkylen, $C_5$-$C_7$-Oxaalkylen, Phenylen oder Benzylen.

Als nichtionische Substituenten $R_1$ und $R_2$ sind beispielsweise Halogen, insbesondere Chlor oder Brom, $C_1$-$C_4$-Alkyl oder $C_1$-$C_4$-Alkoxy zu nennen.

$R_5$ und $R_6$ bzw. $R_8$ und $R_9$ können zusammen mit dem Stickstoff z. B. einen gegebenenfalls durch Methyl substituierten Pyrrolidon-, Morpholin- oder Piperidinring bilden.

$R_5$, $R_6$ und $R_7$ bzw. $R_8$, $R_9$ und $R_{10}$ bilden zusammen mit dem Stickstoff vorzugsweise Pyridinium oder Picolinium.

Von den Farbstoffen der Formel I sind die Farbstoffe der Formel

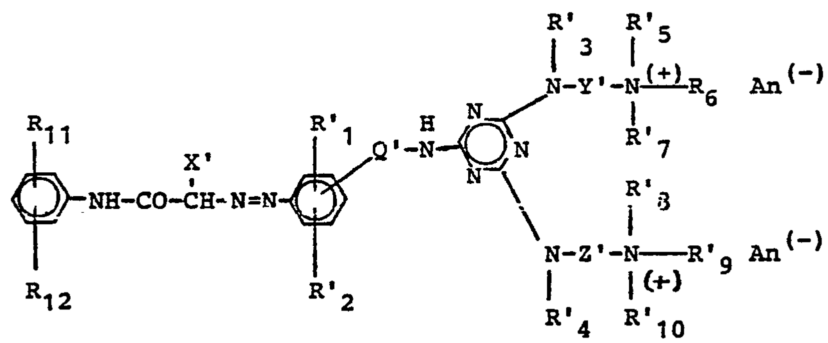

(VII)

worin

$R_{11}$ und $R_{12}$ unabhängig voneinander H, Cl, Br, $OCH_3$, $OC_2H_5$ oder $CH_3$ oder $C_2H_5$,

Q' eine direkte Bindung oder ein Rest p-$NHCOC_6H_4$ oder p-$CONHC_6H_4$,

X' ein Rest der Formel $COCH_3$, CN, $COOCH_3$, $COOC_2H_5$, $CONH_2$, $COC_6H_5$ oder $CON(R'_3)$—Y—$N(R'_5R'_6R'_7)^{(+)}An^{(-)}$,

Y' und Z' unabhängig voneinander eine direkte Bindung, $C_2$-$C_5$-Alkylen, $C_5$-$C_7$-Oxaalkylen, Phenylen oder Benzylen,

$R'_1$ und $R'_2$ unabhängig voneinander H, Cl, Br, $OCH_3$, $OC_2H_5$, $CH_3$ oder $C_2H_5$,

$R'_3$ und $R'_4$ unabhängig voneinander Wasserstoff, $C_1$-$C_4$-Alkyl, β- oder γ-$C_2$-$C_4$-Hydroxyalkyl,

$R'_5$-$R'_{10}$ unabhängig voneinander Wasserstoff, $C_1$-$C_4$-Alkyl, β- oder γ-$C_2$-$C_4$-Hydroxyalkyl, Phenyl oder Benzyl oder

$R'_5$ und $R'_6$ und/oder $R_8$ und $R_9$ jeweils zusammen mit dem Stickstoff einen Pyrolidin, Morpholin oder Piperidin-Ring oder

$R'_5$, $R'_6$ und $R'_7$ und/oder $R'_8$, $R'_9$ und $R'_{10}$ jeweils zusammen mit dem Stickstoff Pyridinium oder Picolinium sind, und

$An^{(-)}$ ein Anion ist.

Bevorzugt werden Farbstoffe der Formel VII, worin $R'_{11}$ Wasserstoff bedeutet und $R'_{12}$ in der o-Stellung zur Aminogruppe und $R'_2$ in der o-Stellung zur Azogruppe stehen.

Von besonderem Wert sind Farbstoffe der Formel

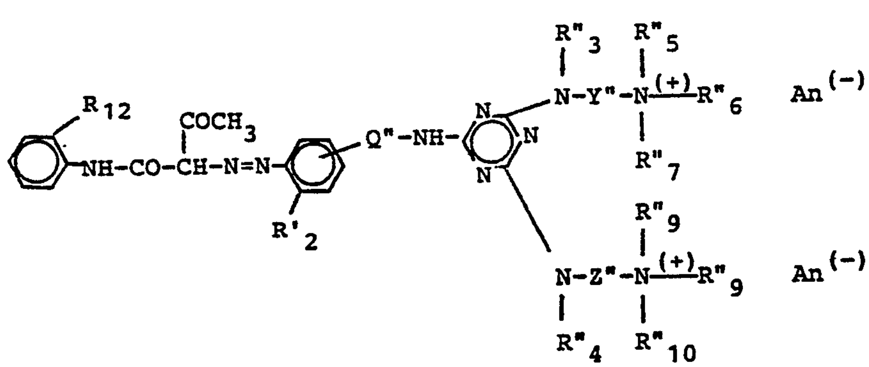

(VIII)

worin

Q″ eine direkte Bindung oder ein Rest p-$NHCOC_6H_4$
Y″ und Z″ unabhängig voneinander $C_2$-$C_4$-Alkylen und
$R''_3$-$R''_{10}$ unabhängig voneinander H, $C_1$-$C_4$-Alkyl oder β-Hydroxy-$C_2$-$C_4$-alkyl sind und
$R'_2$, $R_{12}$ und $An^{(-)}$ die in Formel VII angegebene Bedeutung haben.

Als Arylidkomponenten

$$A—NH_2 \qquad (IX)$$

werden z. B. Anilin, o-Anisidin, o-Toluidin, o-Phenetidin, p-Anisidin, p-Phenetidin, p-Toluidin, m-Anisidin, m-Toluidin, 2-Methoxy-4-methylanilin, 2-Methyl-4-methoxy-anilin, o-Chloranilin, m-Chloranilin, p-Chloranilin oder 2,4-Dimethylanilin verwendet.

Die β-Carbonylcarbonsäurearylide, die als Kupplungskomponenten verwendet werden, erhält man z. B., indem man die Aniline in an sich bekannter Weise mit einem der folgenden Reagentien umsetzt :

Diketen, Acetessigsäuremethylester, Acetessigsäureethylester, Cyanessigsäureethylester, Cyanessigsäuremethylester, Malonsäuredimethylester, Malonsäuredimethylester, Malonsäuremonomethylesteramid, Malonsäuremonomethylesteriminoester, Benzoylessigsäuremethylester.

Die Aniline der Formel (III) erhält man z. B., indem man Nitroaniline nach der in der Deutschen Offenlegungsschrift 29 15 323 beschriebenen Methode umsetzt ; als Reduktionsmethode kommt auch die katalytische Reduktion, z. B. mit Raney-Nickel in Frage. Als Nitroaniline kommen z. B. in Betracht :

p-Nitranilin, n-Nitranilin, 4-Nitro-3-methylanilin, 3-Nitro-4-methylanilin, 4-Nitro-3-methoxyanilin, 3-Nitro-4-methoxyanilin, 3-Nitro-4-methoxyanilin, 3-Nitro-4-ethoxyanilin, 4-Nitro-3-chloranilin, 4-Chlor-3-nitroanilin.

Als Amine, die durch Quaternierung in die Ammoniumverbindungen II und III überführt werden können, können z. B. folgende verwendet werden :

2-Dimethylaminoethylamin, 3-Dimethylaminopropylamin, 2-(2′-Dimethylaminoethoxy-)-ethylamin, 3-Morpholinopropylamin, 2-Diethylaminoethylamin, 3-Diethylaminopropylamin, 2-(bis-β-hydroxyethylamino)-ethylamin, 2-(Bis-β-hydroxyethylamino)-propylamin, 4-Dimethylaminoanilin, 3-Dimethylaminoanilin, 4-Amino-dimethylbenzylamin, 3-Aminodimethylbenzylamin, 4-Amino-methylbenzylamino, 1,2-Diaminoethan, 1,2-Diaminopropan, 1,2-Diaminobutan, 1,4-Diaminobutan, 2-Methylamino-ethylamin, Methyl-2-aminopropylamin, Diethylentriamin, Bis-(3-aminopropyl)-amin, Bis-(3-aminopropyl)-methylamin, β-Hydroxyethyl-piperazin, β-Aminoethyl-piperazin.

Zur Überführung der tertiären Amine in die entsprechenden quartären Ammoniumionen kann man entweder eine organische oder Mineralsäure addieren oder mit einem Quaternierungsreagenz umsetzen, z. B. mit Methylchlorid, Methylbromid, Methyliodid, Benzosulfonsäuremethylester, Ethylchlorid, Benzolsulfonsäureethylester Dimethylsulfat und Diethylsulfat oder Ethylenoxid, Propylenoxid oder Butylenoxid in Gegenwart von Säuren.

Die Umsetzung mit dem Quaternierungsreagenz kann auch an anderer geeigneter Stelle des Syntheseweges erfolgen, z. B. als letzter Schritt nach der Kupplung.

Anstelle der Nitroaniline kann man auch die entsprechenden halbseitig geschützten Phenylendiamine verwenden, z. B. die Formylaminoaniline oder die Aminophenyloxamidsäuren, wobei man dann statt der Reduktion eine selektive Hydrolyse der Schutzgruppe vornehmen muß.

Ebensogut kann man auch in der üblichen Weise die geeigneten Nitroaniline oder Formylaminoaniline bzw. Aminophenyloxamid-Säuren in die entsprechenden β-Carbonylcarbonsäurearylide überführen, diese mit einer der erfindungsgemäßen Diazoniumverbindung kuppeln und die Kupplungsprodukte selektiv reduzieren bzw. hydrolysieren ; die entstandene Aminogruppe wird nun in üblicher Weise mit einem Cyanurhalogenid, dieses Produkt mit den erfindungsgemäßen Diaminen umgesetzt ; schließlich wird wie oben angeführt die bisquartäre Ammoniumverbindung hergestellt.

Die erfindungsgemäßen Farbstoffe färben kationisch anfärbbare Materialien wie z. B. Polyacrylnitril, sauer modifizierten Polyester und Polyamid, Wolle und Leder, aber auch cellulosehaltige Materialien wie z. B. Baumwolle und Celluloseregenerat-Fasern, insbesondere Papier mit guten Echtheiten in gelben Tönen.

Die Farbstoffe können zum Papiermasse-Färben oder zur Papieroberflächenfärbung eingesetzt werden. Sie sind geeignet für geleimte und für ungeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 4 bis 8, insbesondere pH 5 bis 7. Die Färbetemperatur beträgt im allgemeinen 10° bis 50°, vorzugsweise etwa 20°.

Die bei der Papierfärbung und -Herstellung üblichen Hilfsmittel und Füllstoffe können beim Einsatz der erfindungsgemäßen Farbstoffe mitverwendet werden. Die Farbstoffe besitzen bei der Papierfärbung ein ausgezeichnetes Ziehvermögen.

Die mit den erfindungsgemäßen Farbstoffen erhaltenen Papierfärbungen zeichnen sich durch sehr gute Wasserechtheit (Ausblutechtheit) sowie Säure-, Alkali- und Alaun-Echtheit aus. Hervorzuheben ist aber die überraschend hohe Lichtechtheit der Papierfärbungen. Auch auf die Brillanz und Klarheit der Farbtöne ist hinzuweisen. Ferner ist das Kombinationsverhalten mit geeigneten Farbstoffen sehr gut.

Die Farbstoffe können auch zum Färben von Baumwolle und von Celluloseregenerat-Fasern eingesetzt werden, ohne daß die bisher üblichen Hilfsmittel wie z. B. die Tannin-Vorbehandlung angewendet werden müssen ; auch auf die Zugabe von Salz kann verzichtet werden.

Das Färben erfolgt dann vorzugsweise bei Werten von 4 bis 8, insbesondere bei pH 5 bis 7. Die Färbetemperatur beträgt im allgemeinen 60° bis 130 °C, vorzugsweise 80° bis 100 °C.

Aus der DE-A 2915323 sind Sulfonsäuregruppen enthaltende Azofarbstoffe, die einen Triazinylamino-Rest enthalten können und zum Färben von Cellulose und Papier geeignet sind, bekannt.

Beispiel A

92 g Cyanurchlorid werden in 750 ml Aceton gelöst und auf 0° abgekühlt. Nach Zugabe von 69 g p-Nitroanilin tropft man innerhalb einer Stunde 130 ml einer 4n-Sodalösung zu and läßt noch eine Stunde nachrühren. Der bei Zugabe von 600 ml Eiswasser entstehende Niederschlag wird abgesaugt und in kleinen Portionen in 250 g 3-Dimethylaminopropylamin eingetragen, wobei sich der Ansatz auf ca. 60° erwärmt. Man rührt noch eine Stunde bei Ca. 100°. Nach Zugabe von 500 ml Wasser wird bei 50° katalytisch über Raney-Nickel hydriert. Nach Beendigung der Reduktion wird der Katalysator abfiltriert ; das Filtrat wird durch Zugabe von Natronlauge auf pH 14 gebracht, wobei sich das Produkt der Formel (a)

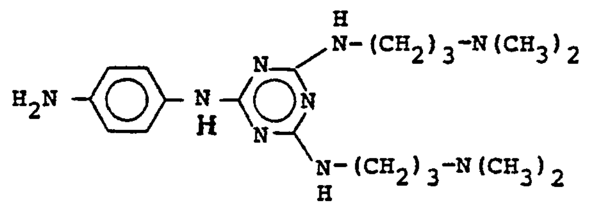

(a)

als Öl abscheidet.

Verwendet man statt des in Beispiel A eingesetzten 3-Dimethylaminopropylamin eine äquimolare Menge 1,2-Diaminopropan, so erhält man das Zwischenprodukt der Formel

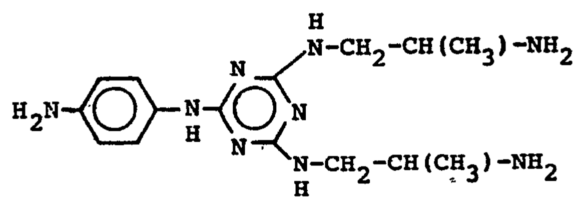

(b)

Beispiele C-L

Verwendet man statt des in Beispiel A eingesetzten 4-Nitroanilins eines der in der folgenden Tabelle aufgeführten Edukte, so erhält man die entsprechenden Produkte der Formel

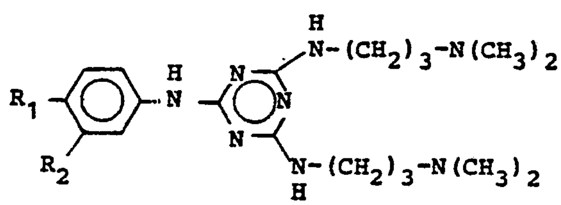

(c)

| Beispiel | Edukt | Produkt | |
|---|---|---|---|
| C | 3-Methoxy-4-nitroanilin | $R_1 = NH_2$ | $R_2 = CH_3$ |
| D | 3-Ethoxy-4-nitroanilin | $NH_2$ | $OC_2H_5$ |
| E | 3-Methyl-4-nitroanilin | $NH_2$ | $CH_3$ |
| F | 3-Chlor-4-nitroanilin | $NH_2$ | Cl |

(Fortsetzung)

| Beispiel | Edukt | Produkt | |
|---|---|---|---|
| G | 3-Nitroanilin | H | $NH_2$ |
| H | 3-Nitro-4-methoxyanilin | $OCH_3$ | $NH_2$ |
| J | 3-Nitro-4-ethoxyanilin | $OC_2H_5$ | $NH_2$ |
| K | 3-Nitro-4-methylanilin | $CH_3$ | $NH_2$ |
| L | 3-Nitro-4-chloranilin | Cl | $NH_2$ |

Beispiele M-U

Verwendet man statt des in Beispiel B eingesetzten 4-Nitroanilins eine äquimolare Menge eines der in der folgenden Tabelle aufgeführten Edukte, so erhält man die entsprechenden Produkte der Formel

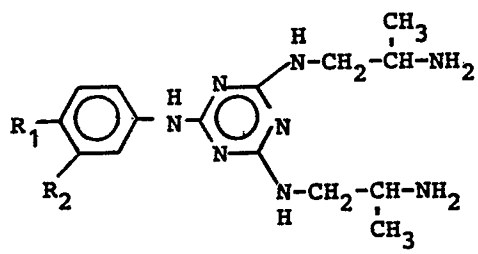

(d)

| Beispiel | Edukt | Produkt | |
|---|---|---|---|
| M | 3-Methoxy-4-nitroanilin | $R_1$ = $NH_2$ | $R_2$ = $OCH_3$ |
| N | 3-Ethoxy-4-nitroanilin | $NH_2$ | $OC_2H_5$ |
| O | 3-Methyl-4-nitroanilin | $NH_2$ | $CH_3$ |
| P | 3-Chlor-4-nitroanilin | $NH_2$ | Cl |
| Q | 3-Nitroanilin | H | $NH_2$ |
| R | 3-Nitro-meth- oxyanilin | $OCH_3$ | $NH_2$ |
| S | 3-Nitro-4-ethoxyanilin | $OC_2H_5$ | $NH_2$ |
| T | 3-Nitro-4-methylanilin | $CH_3$ | $NH_2$ |
| U | 3-Nitro-4-chloranilin | Cl | $NH_2$ |

Beispiel 1

77 g des Zwischenproduktes aus Beispiel A werden in 300 ml Wasser gelöst, mit 100 g Eis und 60 ml 30 %iger Salzsäure versetzt und mit 14 g Natriumnitrit diazotiert. 41,4 g Acetessigsäure-o-anisidid werden

mit 8 g Natriumhydroxid in 300 ml Wasser gelöst; diese Lösung läßt man in die Lösung der Diazoniumverbindung eintropfen. Zur Vervollständigung der Kupplung wird der pH-Wert durch Zugabe von Natriumacetat auf ca. 5,5 gebracht, dann wird noch 2 Stunden nachgerührt. Durch Zugabe von Sodalösung wird der pH-Wert auf 9-10 gebracht, wobei das Kupplungsprodukt ausfällt. Es wird isoliert und in 200 ml Eisessig und 100 ml Wasser aufgelöst. Die so erhaltene stabile Lösung färbt cellulosehaltige Materialen in grünstichig gelben Tönen.

Beispiele 2-10

Verwendet man statt des in Beispiel 1 eingesetzten Zwischenproduktes aus Beispiel A die Zwischenprodukte aus den Beispielen C-L als Diazokomponenten, so erhält man die in der folgenden Tabelle angegebenen gelben Farbstoffe der Formel (e), von denen ebenfalls stabile Lösungen erhalten werden.

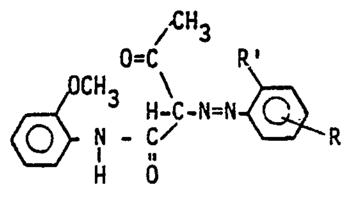

R = 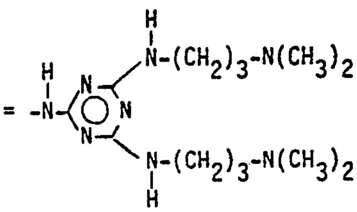

(e)

| Beispiel | Zwischenprodukt | Farbstoff | |
|---|---|---|---|
| | | R' | R in Position |
| 2 | C | $OCH_3$ | 4 |
| 3 | D | $OC_2H_5$ | 4 |
| 4 | E | $CH_3$ | 4 |
| 5 | F | Cl | 4 |
| 6 | G | H | 5 |
| 7 | H | $OCH_3$ | 5 |
| 8 | J | $OC_2H_5$ | 5 |
| 9 | K | $CH_3$ | 5 |
| 10 | L | Cl | 5 |

Beispiele 11-20

Verwendet man statt des in Beispiel 1 verwendeten Acetessigsäure-o-anisidids als Kupplungskomponente Acetessigsäureanilid und als Diazokomponente die Zwischenprodukte A und C-L, so erhält man die in der folgenden Tabelle angegebenen gelben Farbstoffe der Formel (f), von denen ebenfalls stabile Lösungen erhalten werden.

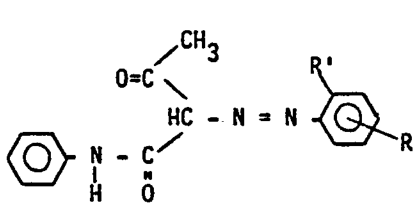

R = 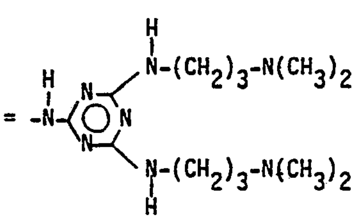

(f)

| Beispiel | Zwischenprodukt | Farbstoff | |
|---|---|---|---|
| | | R' | R in Position |
| 11 | A | H | 4 |
| 12 | C | $OCH_3$ | 4 |
| 13 | D | $OC_2H_5$ | 4 |
| 14 | E | $CH_3$ | 4 |
| 15 | F | Cl | 4 |
| 16 | G | H | 5 |
| 17 | H | $OCH_3$ | 5 |
| 18 | I | $OC_2H_5$ | 5 |
| 19 | K | $CH_3$ | 5 |
| 20 | L | Cl | 5 |

Beispiele 21-30

Verwendet man statt des in Beispiel 1 verwendeten Acetessigsäure-o-anisidids als Kupplungskomponente Acetessigsäure-o-toluidid und als Diazokomponente die Zwischenprodukte A und C-L, so erhält man die in der folgenden Tabelle angegebenen gelben Farbstoffe der Formel (g), von denen ebenfalls stabile Lösungen erhalten werden.

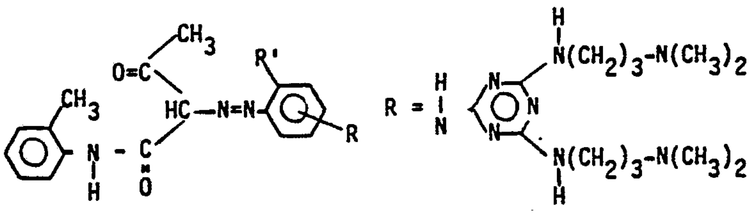

(g)

| Beispiel | Zwischenprodukt | Farbstoff | |
|---|---|---|---|
| | | R' | R in Position |
| 21 | A | H | 4 |
| 22 | C | $OCH_3$ | 4 |
| 23 | D | $OC_2H_5$ | 4 |
| 24 | E | $CH_3$ | 4 |

(Fortsetzung)

| Beispiel | Zwischenprodukt | Farbstoff | |
|---|---|---|---|
| 25 | F | Cl | 4 |
| 26 | G | H | 5 |
| 27 | H | $OCH_3$ | 5 |
| 28 | I | $OC_2H_5$ | 5 |
| 29 | K | $CH_3$ | 5 |
| 30 | L | Cl | 5 |

Beispiele 31-40

Verwendet man statt des in Beispiel 1 verwendeten Acetessigsäure-o-anisidids als Kupplungskomponente Acetessigsäure-o-chloranilid und als Diazokomponente die Zwischenprodukte A und C-L bzw. B und M-U, so erhält man die in der folgenden Tabelle angegebenen gelben Farbstoffe der Formel (h), von denen ebenfalls stabile Lösungen erhalten werden.

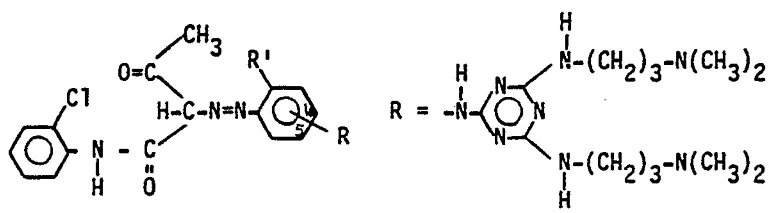

(h)

| Beispiel | Zwischenprodukt | Farbstoff | |
|---|---|---|---|
| | | R' | R in Position |
| 31 | A | H | 4 |
| 32 | C | $OCH_3$ | 4 |
| 33 | D | $OC_2H_5$ | 4 |
| 34 | E | $CH_3$ | 4 |
| 35 | F | Cl | 4 |
| 36 | G | H | 5 |
| 37 | H | $OCH_3$ | 5 |
| 38 | I | $OC_2H_5$ | 5 |
| 39 | K | $CH_3$ | 5 |
| 40 | L | Cl | 5 |

## Beispiele 41-50

Verwendet man statt des in Beispiel 1 verwendeten Acetessigsäure-o-anisidids als Kupplungskomponente Acetessigsäure-m-xylidis und als Diazokomponente die Zwischenprodukte A und C-L, so erhält man die in der folgenden Tabelle angegebenen gelben Farbstoffe der Formel (i) ; von denen ebenfalls stabile Lösungen erhalten werden.

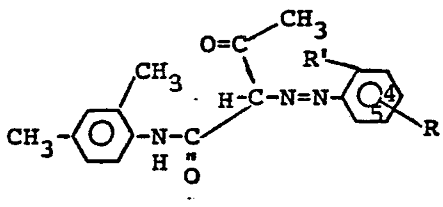
R =
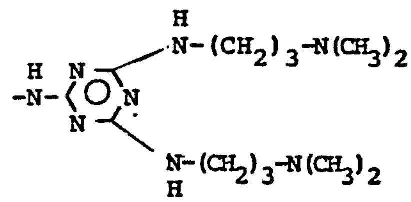
(i)

| Beispiel | Zwischenprodukt | Farbstoff | |
|---|---|---|---|
| | | R' | R in Position |
| 41 | A | H | 4 |
| 42 | C | $OCH_3$ | 4 |
| 43 | D | $OC_2H_5$ | 4 |
| 44 | E | $CH_3$ | 4 |
| 45 | F | Cl | 4 |
| 46 | G | H | 5 |
| 47 | H | $OCH_3$ | 5 |
| 48 | I | $OC_2H_5$ | 5 |
| 49 | K | $CH_3$ | 5 |
| 50 | L | Cl | 5 |

## Beispiel 51

Verwendet man statt des in Beispiel 1 eingesetzten Zwischenproduktes aus Beispiel A eine äquimolare Menge des Zwischenproduktes aus Beispiel B, so erhält man eine Lösung des gelben Farbstoffs der Formel

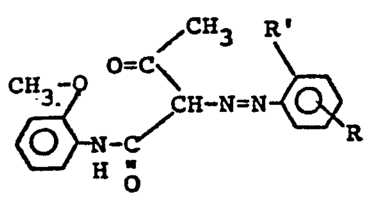
R =
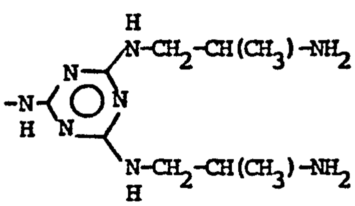
(k)

## Beispiele 52-60

Verwendet man statt des in Beispiel 51 eingesetzten Zwischenproduktes aus Beispiel B die

Zwischenprodukte aus den Beispielen M-U, so erhält man ebenfalls Lösungen gelber Farbstoffe der Formel (k)

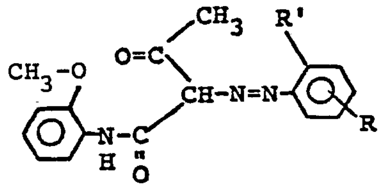 R = 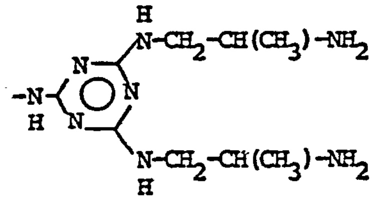 (k)

| Beispiel | Zwischenprodukte | Farbstoff | |
|---|---|---|---|
| | | R' | R in Position |
| 52 | M | $OCH_3$ | 4 |
| 53 | N | $OC_2H_5$ | 4 |
| 54 | O | $CH_3$ | 4. |
| 55 | P | Cl | 4 |
| 56 | Q | H | 5 |
| 57 | R | $OCH_3$ | 5 |
| 58 | S | $OC_2H_5$ | 5 |
| 59 | T | $CH_3$ | 5 |
| 60 | U | Cl | 5 |

Beispiel 61

Die Paste des Kupplungsproduktes aus Beispiel 1 wird in 400 ml Wasser suspendiert, der pH-Wert dieser Suspension wird mit verdünnter Natronlauge auf ca. 10 gebracht. Dazu läßt man bei Raumtemperatur 37,8 g Dimethylsulfat langsam zutropfen; der pH-Wert wird durch Zugabe von verdünnter Natronlauge konstant gehalten. Wenn die Quaternierung beendet ist, wird der Anzatz zur Zerstörung des überschüssigen Dimethylsulfats auf 80° erhitzt. Man erhält eine stabile Lösung, die cellulosehaltige Materialien in grünstichig gelben Tönen anfärbt.

Beispiele 62-120

Verwendet man statt der in Beispiel 51 eingesetzten Paste des Kupplungsproduktes die Pasten der Kupplungsprodukte aus den Beispielen 2-50, so erhält man ebenfalls Lösungen gelber Farbstoffe.

Beispiel 121

Ein aus 60 % Holzschliff und 40 % ungebleichtem Sulfitzellstoff bestehender Trockenstoff wird im Holländer mit Wasser angeschlagen und bis zum Mahlgrad 40° SR gemahlen, so daß der Trockengehalt etwas über 2,5 % liegt und anschließend mit Wasser auf 2,5 % Trockengehalt des Dickstoffs eingestellt.

200 Teile dieses Dickstoffs werden mit 5 Teilen einer 0,5 %igen essigsauren wäßrigen Lösung des

Farbstoffs aus Beispiel 1 versetzt, ca. 5 Minuten verrührt, mit 2 % Harzleim und 3 % (bezogen auf Trockenstoff) versetzt und wieder einige Minuten bis zur Homogenität verrührt. Man verdünnt die Masse nur mit ca. 500 Teilen Wasser und stellt hieraus in üblicher Weise durch Absaugen über einen Blattbildner Papierblätter her. Die Papierblätter weisen eine grünstichig gelbe Färbung auf. Das Abwasser der Färbung ist praktisch farbstoffrei.

Beispiel 122

Verwendet man statt des in Beispiel 100 eingesetzten Farbstoffs den Farbstoff aus Beispiel 51, so erhält man ebenfalls grünstichig gelb gefärbte Papierblätter und ein praktisch farbstoffreies Abwasser.

Beispiele 123-124

Auch beim Färben von ungebleichter Papiermasse unter sonst gleichen Färbebedingungen und bei der Verwendung von gebleichtem Sulfitzellstoff erhält man grünstichig-gelbe Papierfärbungen und praktisch farbstofffreie Abwässer.

**Ansprüche**

1. Kationische Triazinfarbstoffe der allgemeinen Formel

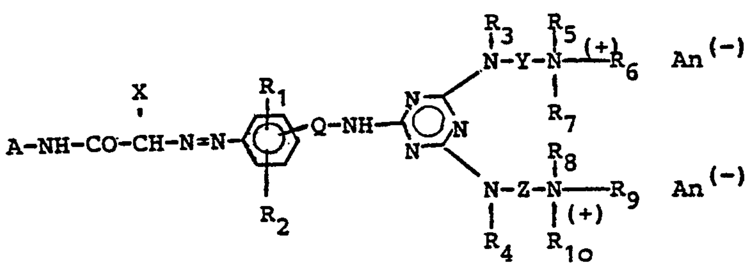

worin

A ein von anionischen Gruppen freier aromatischer oder heteroaromatischer Rest,

Q eine direkte Bindung oder ein Brückenglied

X ein Rest der Formel $COCH_3$, CN, $COOCH_3$, $COOC_2H_5$, $CONH_2$, $COC_6H_5$ oder $CON(R_3)—Y—N(R_5H_6R_7)^{(+)}An^{(-)}$,

Y und Z unabhängig voneinander ein zweiwertiges Brückenglied oder eine direkte Bindung,

$R_1$ und $R_2$ unabhängig voneinander Wasserstoff oder ein nichtionischer Substituent,

$R_3$ und $R_4$ unabhängig voneinander Wasserstoff, $C_1$-$C_4$-Alkyl oder β- oder γ-$C_2$-$C_4$-Hydroxyalkyl,

$R_5$-$R_{10}$ unabhängig voneinander Wasserstoff, $C_1$-$C_4$-Alkyl, β- oder γ-$C_2$-$C_4$-Hydroxyalkyl, β- oder γ-$C_2$-$C_4$-Ammoniumalkyl, Phenyl oder Benzyl sind, oder

$R_5$ und $R_6$ und/oder $R_8$ und $R_9$ jeweils zusammen mit dem Stickstoff einen fünf- oder sechsgliedrigen Heterocyclus oder

Y, $R_3$ und $R_5$ und/oder Z, $R_4$ und $R_8$ zusammen mit den jeweiligen Stickstoffatomen einen Piperazinring oder

$R_5$, $R_6$ und $R_7$ und/oder $R_8$, $R_9$ und $R_{10}$ jeweils zusammen mit dem Stickstoff einen gegebenenfalls substituiertes Pyridinium bilden, und

$An^{(-)}$ ein Anion ist.

2. Kationische Triazinfarbstoffe der Formel des Anspruchs 1, worin

A für einen Rest der Benzol-, Naphthalin-, Thiazol-, Benzthiazol-, Benzisothiazol- oder Thiadiazol-Reihe,

Q für eine direkte Bindung oder einen Rest

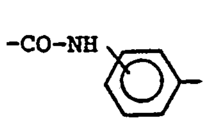 oder 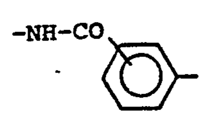

Y und Z für $C_2$-$C_5$-Alkylen, $C_5$-$C_7$-Oxaalkylen, Phenylen oder Benzylen und

$R_1$ und $R_2$ für Wasserstoff, halogen, $C_1$-$C_4$-Alkyl oder $C_1$-$C_4$-Alkoxy stehen.

3. Kationische Triazinfarbstoffe der allgemeinen Formel

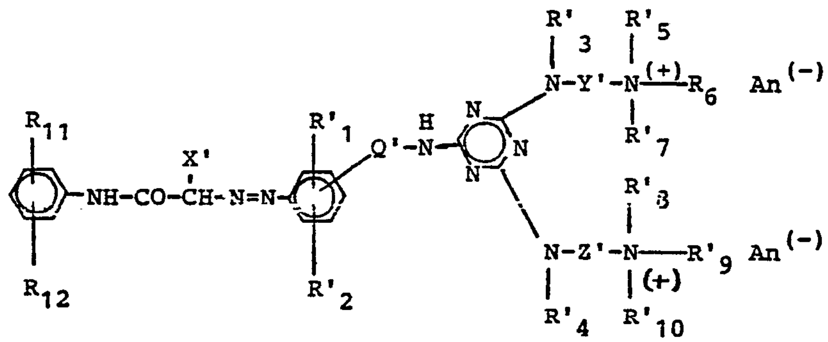

worin

$R_{11}$ und $R_{12}$ unabhängig voneinander H, Cl, Br, $OCH_3$, $OC_2H_5$ oder $CH_3$ oder $C_2H_5$,

Q' eine direkte Bindung oder ein Rest p-$NHCOC_6H_4$ oder p-$CONHC_6H_4$,

X' ein Rest der Formel $COCH_3$, CN, $COOCH_3$, $COOC_2H_5$, $CONH_2$, $COC_5H_5$ oder $CON(R'_3)$—Y—$N(R'_5R'_6R'_7)^{(+)}An^{(-)}$,

Y' und Z' unabhängig voneinander eine direkte Bindung, $C_2$-$C_5$-Alkylen, $C_5$-$C_7$-Oxaalkylen, Phenylen oder Benzylen,

$R'_1$ und $R'_2$ unabhängig voneinander H, Cl, Br, $OCH_3$, $OC_2H_5$, $CH_3$ oder $C_2H_5$,

$R'_3$ und $R'_4$ unabhängig voneinander Wasserstoff, $C_1$-$C_4$-Alkyl, β- oder γ-$C_2$-$C_4$-Hydroxyalkyl,

$R'_5$-$R'_{10}$ unabhängig voneindander Wasserstoff, $C_1$-$C_4$-Alkyl, β- oder γ-$C_2$-$C_4$-Hydroxyalkyl, Phenyl oder Benzyl, oder

$R'_5$ und $R'_6$ und/oder $R_8$ und $R_9$ jeweils zusammen mit dem Stickstoff einen Pyrolidin-, Morpholin- oder Piperidin-Ring oder

$R'_5$, $R'_6$ und $R'_7$ und/oder $R'_8$, $R'_9$ und $R'_{10}$ jeweils zuwammen mit dem Stickstoff Pyridinium oder Picolinium sind, und

$An^{(-)}$ ein Anion ist.

4. Kationische Triazinfarbstoffe der allgemeinen Formel

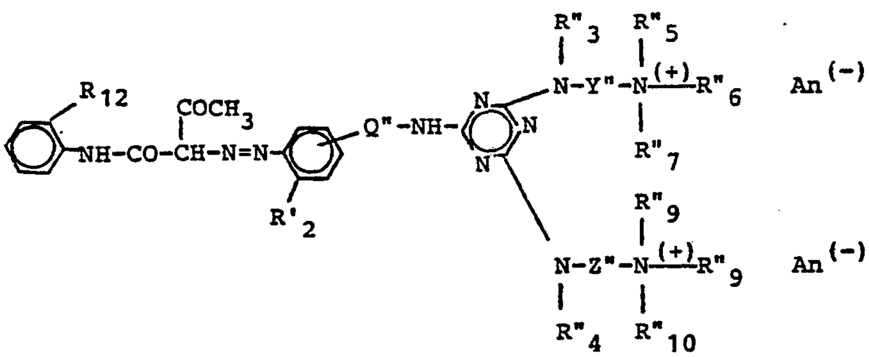

worin

Q" eine direkte Bindung oder ein Rest p-$NHCOC_6H_4$,

Y" und Z" unabhängig voneinander $C_2$-$C_4$-Alkylen und

$R''_3R''_{10}$ unabhängig. voneinander H, $C_1$-$C_4$-Alkyl oder β-Hydroxy-$C_2$-$C_4$-alkyl sind, und

$R'_1$, $R_{12}$ und $An^{(-)}$ die in Anspruch 3 angegebene Bedeutung haben.

5. Verfahren zur Herstellung von kationischen Triazinfarbstoffen des Anspruchs 1, dadurch gekennzeichnet, daß man ein Mol eines Cyanurhalogenids in beliebiger Reihenfolge mit je einem Mol der Verbindungen

$$[HN(R_3)—Y—NR_5R_6R_7]^{(+)}An^{(-)}$$

$$[HN(R_4)—Z—NR_8R_9R_{10}]^{(+)}An^{(-)}$$

und

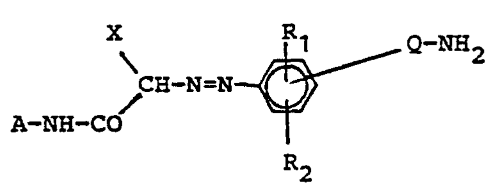

wobei

A, Q, X, Y, Z, $R_1$-$R_{10}$ und $An^{(-)}$ die in Anspruch 1 angebene Bedeutung besitzen, umsetzt.

6. Verfahren zur Herstellung von katonischen Triazinfarbstoffen des Anspruchs 1, dadurch gekennzeichnet, daß man ein Amin der allgemeinen Formel

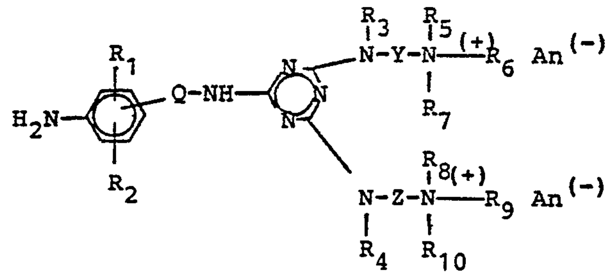

diazotiert und mit einer Kupplungskomponente der allgemeinen Formel

X—$CH_2$—CO—NH—A

wobei

A, Q, X, Y, $R_1$-$R_{10}$ und $An^{(-)}$ die in Anspruch 1 angegebene Bedeutung besitzen, kuppelt.

7. Verfahren zum Färben von natürlichen und synthetischen kationisch anfärbbaren Substraten und Massen, dadurch gekennzeichnet, daß man Farbstoffe des Anspruchs 1 verwendet.

8. Verfahren zum Färben von Papier in der Masse und in der Oberfläche, dadurch gekennzeichnet, daß man Farbstoffe des Anspruchs 1 verwendet.

**Claims**

1. Cationic triazine dyestuffs of the general formula

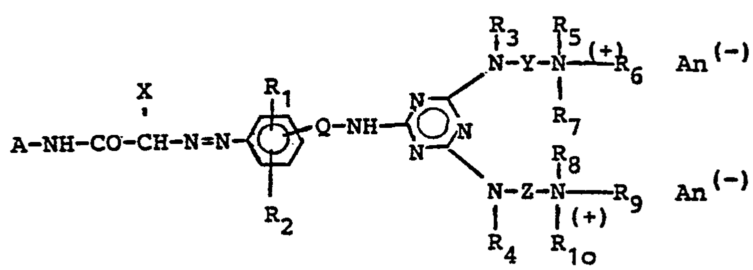

wherein

A is an aromatic or hetero-aromatic radical which is free from anionic groups,

Q is a direct bond or a bridge member,

X is a radical of the formula $COCH_3$, CN, $COOCH_3$, $COOC_2H_5$, $CONH_2$, $COC_6H_5$ or CON-($R_3$)—Y—N($R_5R_6R_7$)$^{(+)}An^{(-)}$,

Y and Z independently of one another are divalent bridge members or direct bonds,

$R_1$ and $R_2$ independently of one another are hydrogen or non-ionic substituents,

$R_3$ and $R_4$ independently of one another are hydrogen, $C_1$-$C_4$-alkyl or β- or γ-hydroxy-$C_2$-$C_4$-alkyl and

$R_5$-$R_{10}$ independently of one another are hydrogen, $C_1$-$C_4$-alkyl, β- or γ-hydroxy-$C_2$-$C_4$-alkyl, β- or γ-ammonium-$C_2$-$C_4$-alkyl, phenyl or benzyl, or

$R_5$ and $R_6$, and/or $R_8$ and $R_9$, in each case together with the nitrogen, form a five-membered or six-membered heterocyclic radical, or

Y, $R_3$ and $R_5$, and/or Z, $R_4$ and $R_8$, together with the particular nitrogen atoms, form a piperazine ring, or

$R_5$, $R_6$ and $R_7$, and/or $R_8$, $R_9$ and $R_{10}$, in each case together with the nitrogen, form an optionally substituted pyridinium radical, and

$An^{(-)}$ is an anion.

2. Cationic triazine dyestuffs of the formula in Claim 1, wherein

A represents a radical of the benzene, naphthalene, thiazole, benzothiazole, benzisothiazole or thiadiazole series,

Q represents a direct bond or a radical

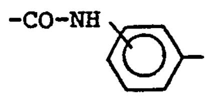

or

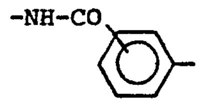

Y and Z represent $C_2$-$C_5$-alkylene, $C_5$-$C_7$-oxaalkylene, phenylene or benzylene and $R_1$ and $R_2$ represent hydrogen, halogen, $C_1$-$C_4$-alkyl or $C_1$-$C_4$-alkoxy.

3. Cationic triazine dyestuffs of the general formula

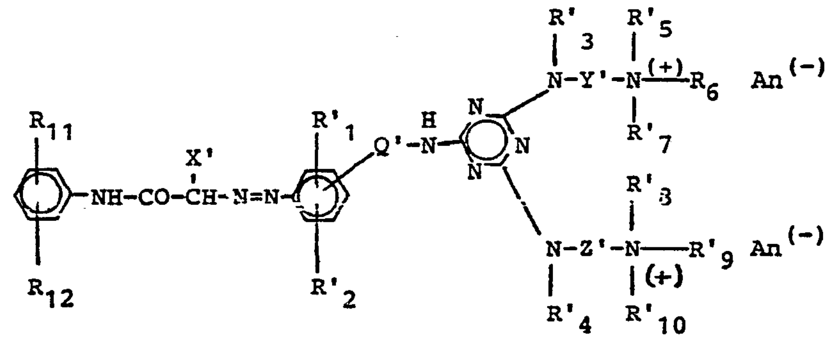

wherein

$R_{11}$ and $R_{12}$ independently one another are H, Cl, Br, $OCH_3$, $OC_2H_5$, $CH_3$ or $C_2H_5$,

Q' is a direct bond or a p-$NHCOC_6H_4$ or p-$CONHC_6H_4$ radical,

X' is a radical of the formula $COCH_3$, CN, $COOCH_3$, $COOC_2H_5$, $CONH_2$, $COC_6H_5$ or CON-$(R'_3)$—Y—$N(R'_5R'_6R'_7)^{(+)}An^{(-)}$,

Y' and Z' independently of one another are direct bonds, $C_2$-$C_5$-alkylene, $C_5$-$C_7$-oxaalkylene, phenylene or benzylene,

$R'_1$ and $R'_2$ independently of one another are H, Cl, Br, $OCH_3$, $OC_2H_5$, $CH_3$ or $C_2H_5$,

$R'_3$ and $R'_4$ independently of one another are hydrogen, $C_1$-$C_4$-alkyl or β- or γ-hydroxy-$C_2$-$C_4$-alkyl, and

$R'_5$-$R'_{10}$ independently of one another are hydrogen, $C_1$-$C_4$-alkyl, β- or γ-hydroxy-$C_2$-$C_4$-alkyl, phenyl or benzyl, or

$R'_5$ and $R'_6$ and/or $R_8$ and $R_9$, in each case together with the nitrogen, form a pyrrolidine, morpholine or piperidine ring, or

$R'_5$, $R'_6$ and $R'_7$, and/or $R'_8$, $R'_9$ and $R'_9$ and $R'_{10}$ in each case together with the nitrogen, are pyridinium or picolinium, and

$An^{(-)}$ is an anion.

4. Cationic triazine dyestuffs of the general formula

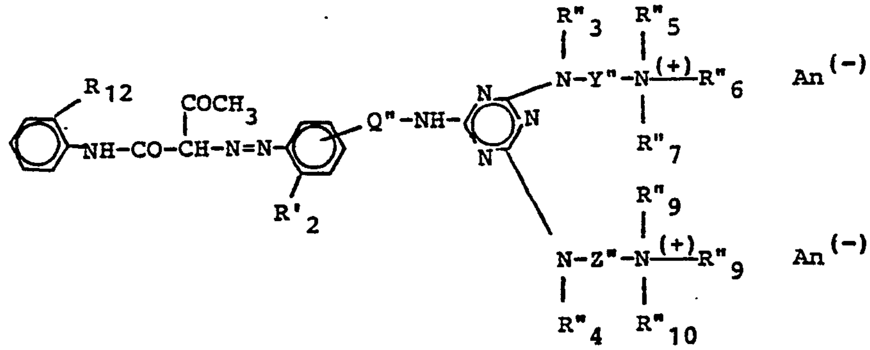

wherein

Q'' is a direct bond or a p-$NHCOC_6H_4$ radical,

Y'' and Z'' independently of one another are $C_2$-$C_4$-alkylene,

$R''_3$-$R''_{10}$ independently of one another are H, $C_1$-$C_4$-alkyl or β-hydroxy-$C_2$-$C_4$-alkyl, and

$R'_1$, $R_{12}$ and $An^{(-)}$ have the meaning given in Claim 3.

5. Process for the preparation of cationic triazine dyestuffs of Claim 1, characterised in that one mol of a cyanuric halide is reacted with one mol of each of the compounds

$[HN(R_3)—Y—NR_5R_6R_7]^{(+)}An^{(-)}$

$[HN(R_4)—Z—NR_8R_9R_{10}]^{(+)}An^{(-)}$

and

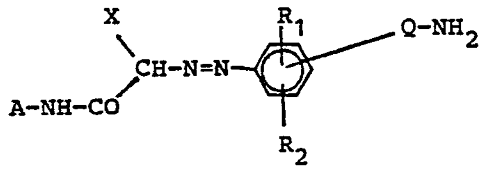

wherein

A, Q, X, Y, Z, $R_1$-$R_{10}$ and $An^{(-)}$ have the meaning given in Claim 1, in any desired sequence.

6. Process for the preparation of cationic triazine dyestuffs of Claim 1, characterised in that an amine of the general formula

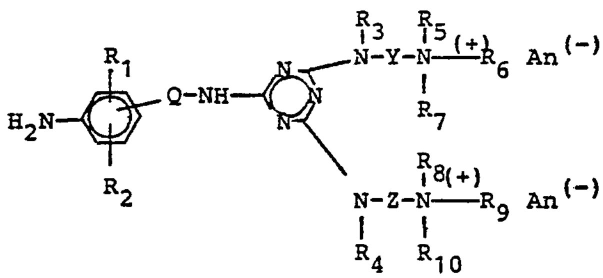

is diazotised, and the diazotisation product is coupled with a coupling component of the general formula

$X—CH_2—CO—NH—A$

wherein

A, Q, X, Y, $R_1$-$R_{10}$ and $An^{(-)}$ have the meaning given in Claim 1.

7. Process for dyeing naturally occurring and synthetic substrates and compositions which can be dyed with cationic dyestuffs, characterised in that dyestuffs of Claim 1 are used.

8. Process for beater-dyeing and surface-dyeing paper, characterised in that dyestuffs of Claim 1 are used.

**Revendications**

1. Colorants triaziniques cationiques de formule générale

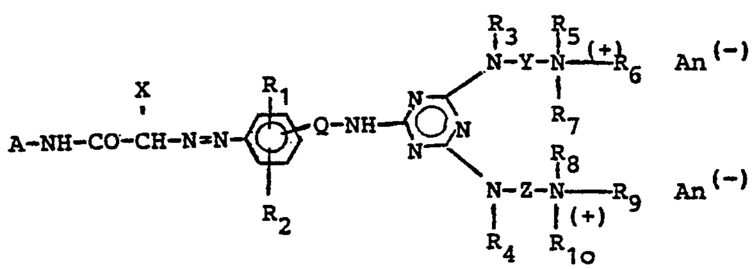

dans laquelle

A est un reste aromatique ou hétéro-aromatique dépourvu de groupes anioniques,

Q est une liaison directe ou un pont,

X est un reste de formule $COCH_3$, CN, $COOCH_3$, $COOC_3H_5$, $CONH_2n$, $COC_6H_5$, ou $CON(R_3)—Y—N(R_5H_6R_7)^{(+)}An^{(-)}$,

Y et Z représentent indépendamment l'un de l'autre un pont divalent ou une liaison directe,

$R_1$ et $R_2$ représentent indépendamment l'un de l'autre l'hydrogène ou un substituant non ionique,

$R_3$ et $R_4$ représentent indépendamment l'un de l'autre l'hydrogène, un groupe alkyle en $C_1$ à $C_4$ ou un groupe β- ou γ-hydroxyalkyle en $C_2$ à $C_4$

$R_5$-$R_{10}$ représentent indépendamment les uns des autres l'hydrogène, un groupe alkyle en $C_1$ à $C_4$, un groupe β- ou γ-hydroxyalkyle en $C_2$ à $C_4$, un groupe β- ou γ-ammoniumalkyle en $C_2$ à $C_4$, un groupe phényle ou un groupe benzyle ou bien

$R_5$ et $R_6$ et/ou $R_8$ et $R_9$ forment dans chaque cas conjointement avec l'atome d'azote un hétérocycle pentagonal ou hexagonal ou bien

Y, $R_3$ et $R_5$ et/ou Z, $R_4$ et $R_8$ forment conjointement avec les atomes d'azote correspondants un noyau de pipérazine ou

$R_5$, $R_6$ et $R_7$ et/ou $R_8$, $R_9$ et $R_{10}$ forment dans chaque cas conjointement avec l'atome d'azote un groupe pyridinium éventuellement substitué, et

$An^{(-)}$ désigne un anion.

2. Colorants triaziniques cationiques de formule suivant la revendication 1, dans laquelle

A représente un reste de la série du benzène, du naphtalène, du thiazole, du benzothiazole, du benzisothiazole ou du thiadiazole,

Q est une liaison directe ou un reste de formule

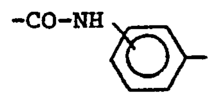

ou

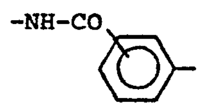

Y et Z représentent un groupe alkylène en $C_2$ à $C_5$, oxaalkylène en $C_5$ à $C_7$, phénylène ou benzylène et

$R_1$ et $R_2$ représentent l'hydrogène, un halogène, un groupe alkyle en $C_1$ à $C_4$ ou un groupe alkoxy en $C_1$ à $C_4$.

3. Colorants triaziniques cationiques de formule générale

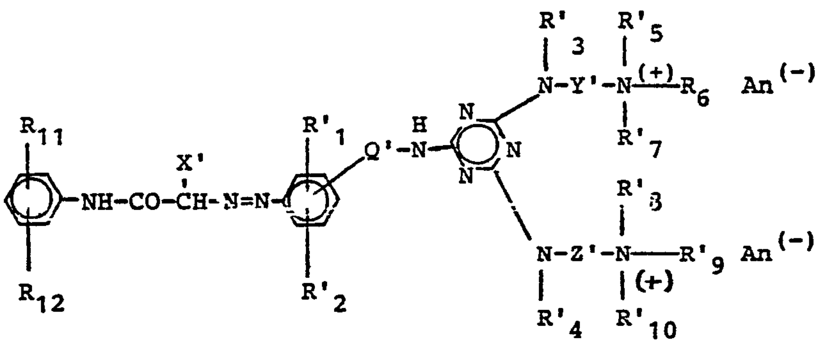

dans laquelle

$R_{11}$ et $R_{12}$ représentent indépendamment l'un de l'autre H, Cl, Br, $OCH_3$, $OC_2H_5$ ou $CH_3$ ou $C_2H_5$,

Q' est une liaison directe ou un reste p-$NHCOC_6H_4$ ou p-$CONHC_6H_4$,

X' est un reste de formule $COCH_3$, CN, $COOCH_3$, $COOC_2H_5$, $CONH_2$, $COC_5H_5$ ou $CON(R'_3)—Y—N(R'_5R'_6R'_7)^{(+)}An^{(-)}$,

Y' et Z' représentent indépendamment l'un de l'autre une liaison directe, un groupe alkylène en $C_2$ à $C_5$, oxa-alkylène en $C_5$ à $C_7$, phénylène ou benzylène,

$R'_1$ et $R'_2$ représentent indépendamment l'un de l'autre H, Cl, Br, $OCH_3$, $OC_2H_5$, $CH_3$ ou $C_2H_5$,

$R'_3$ et $R'_4$ représentent indépendamment l'un de l'autre l'hydrogène, un groupe alkyle en $C_1$ à $C_4$ ou un groupe β- ou γ-hydroxyalkyle en $C_2$ à $C_4$,

$R'_5$-$R'_{10}$ représentent indépendamment les uns des autres l'hydrogène, un groupe alkyle en $C_1$-$C_4$, un groupe β- ou γ-hydroxyalkyle en $C_2$ à $C_4$, phényle ou benzyle ou

$R'_5$ et $R'_6$ et/ou $R_8$ et $R_9$ représentent dans chaque cas conjointement avec l'atome d'azote un noyau de pyrrolidine, de morpholine ou de pipéridine ou bien

$R'_5$, $R'_6$ et $R'_7$ et/ou $R'_8$, $R'_9$ et $R'_{10}$ représentent dans chaque cas conjointement avec l'atome d'azote un groupe pyridinium ou picolinium, et

$An^{(-)}$ est un anion.

4. Colorants triaziniques cationiques de formule générale

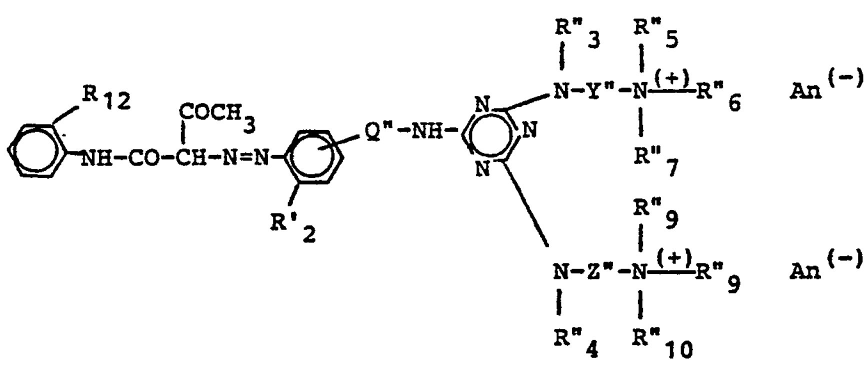

dans laquelle

Q″ est une liaison directe ou un reste p-$NHCOC_6H_4$,

Y″ et Z″ représentent indépendamment l'un de l'autre un groupe alkyle en $C_2$ à $C_4$,

$R''_3$-$R''_{10}$ représentent indépendamment les uns des autres H, un groupe alkyle en $C_1$ à $C_4$ ou un groupe β- hydroxyalkyle en $C_2$ à $C_4$ et

$R'_1$, $R_{12}$ et $An^{(-)}$ ont la définition donnée dans la revendication 3.

5. Procédé de production de colorants triaziniques cationiques suivant la revendication 1, caractérisé en ce que l'on fait réagir une mole d'un halogénure de cyanuryle dans un ordre quelconque avec une mole de chacun des composés

$$[HN(R_3)—Y—NR_5R_6R_7]^{(+)}An^{(-)}$$

$$[HN(R_4)—Z—NR_8R_9R_{10}]^{(+)}An^{(-)}$$

et

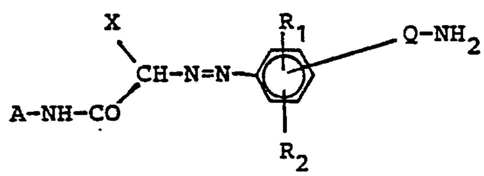

où

A, Q, X, Y, Z, $R_1$-$R_{10}$ et $An^{(-)}$ ont les définitions données dans la revendication 1.

6. Procédé de production de colorants triaziniques cationiques suivant la revendication 1, caractérisé en ce qu'on diazote une amine de formule générale

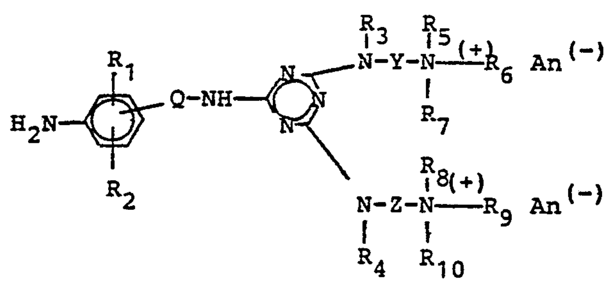

et on la fait copuler avec un copulant de formule générale

$$X—CH_2—CO—NH—A$$

où

A, Q, X, Y, $R_1$-$R_{10}$ et $An^{(-)}$ ont les définitions données dans la revendication 1.

7. Procédé de teinture de substrats et de matières naturelles et synthétiques pouvant recevoir une teinture cationique, caractérisé en ce qu'on utilise des colorants suivant la revendication 1.

8. Procédé de teinture de papier dans la masse et en surface, caractérisé en ce qu'on utilise des colorants suivant la revendication 1.